# EUROPEAN PATENT SPECIFICATION

(11) **EP 0 626 792 B1**
(45) Date of publication and mention of the grant of the patent: **28.07.1999**
(21) Application number: 94107934.5
(22) Date of filing: 24.05.1994
(51) Int. Cl.: H04N 7/167, H04N 7/18

(54) **Improved system for the reception of coded television signals, having a presence detector and relative apparatus**
Verbessertes System zum Empfang kodierter Fernsehsignale mit Anwesenheitsdetektor und entsprechende Vorrichtung
Système amélioré pour la réception de signaux de télévision codés avec détecteur de présence et dispositif correspondant

(30) Priority: 25.05.1993 IT RM930350
(43) Date of publication of application: 30.11.1994
(73) Proprietor: EDICO S.r.l., I-00197 Roma (IT)
(72) Inventor: D'Errico, Federico, I-00186 Roma (IT)

(56) References cited:
- DE-U- 9 207 985
- US-A- 3 605 110
- US-A- 3 975 585
- US-A- 4 802 022
- US-A- 5 060 079
- US-A- 5 142 358
- PATENT ABSTRACTS OF JAPAN vol. 16, no. 482 (E-1275) 7 October 1992 & JP-A-04 175 079 (NEC OFF SYST LTD) 23 June 1992
- PATENT ABSTRACTS OF JAPAN vol. 16, no. 95 (E-1175) 9 March 1992 & JP-A-03 274 812 (MAZDA MOTOR CORP) 5 December 1991
- PATENT ABSTRACTS OF JAPAN vol. 13, no. 577 (P-1146) 21 December 1990 & JP-A-02 247 853 (SHARP CORP) 3 October 1990
- PATENT ABSTRACTS OF JAPAN vol. 1, no. 145 (E-067) 25 November 1977 & JP-A-52 083 207 (FUJITSU LTD) 12 July 1977

## Description

The present invention relates to a system for the reception of coded television signals, in which a television signal is coded so as that it cannot be received and produced in the normal way by normal television receivers, but only by receivers equipped with an appropriate decoder.

It is known that distribution systems of television programs upon payment are in use, in which the television signal undergoes a coding (ciphering) in the broadcasting station, so as to alter its characteristics; for receiving such signals in a satisfactory manner a receiver is necessary being equipped with an appropriate decoder (decipher), that supplies the signal with its original characteristics, so as to permit the visual and audio reproduction in a satisfactory manner.

It is also known the sale, by way of the producer of such transmissions, of appropriate decoders to be connected to a normal television signals receiver (television and/or video recorder) with the aim of making them able to receive such coded signals.

One of the possible frauds committed against such producers is that of buying a single decoder, which supplies, for instance in the case of a central antenna unit, a considerable number of users.

It is known from DE-U-9 207 985 a television set which is connectable to at least a videorecorder and a decoder, for supplying to the recorder the signals coming from the television set and from the decoder, wherein it is provided a recording mode for the television set by which only the receiving part of the set are supplied with current. It is also known from US-A-4802022 a CATV system for a guest facility such as an hotel, including a monitor installed in each room, an activator for activating the monitor and a sensor for detecting a guest who has entered the room and comes close to the monitor, and a display controller for displaying guest information such as an hotel guide when sensor detects the presence of the guest in proximity of the monitor.

The aim of the present invention is that of indicating how it is possible to realise a system for the reception of coded television signals that eliminates or reduces such drawbacks of the known systems.

In view of realising such aims the present invention has as its subject a system for the reception of coded television signals having the characteristics indicated in the attached claim 1.

The characteristics and advantages of the system according to the invention will become clear from the following description, executed with reference to the annexed drawings, that are supplied purely as an explanatory and non-limiting example, wherein:
figures 1A and 1B represents the simplified block diagram of a reception system according to the invention;
figure 2 schematically represents a significant part of the logic control circuit of the reception system of figures 1A and 1B.

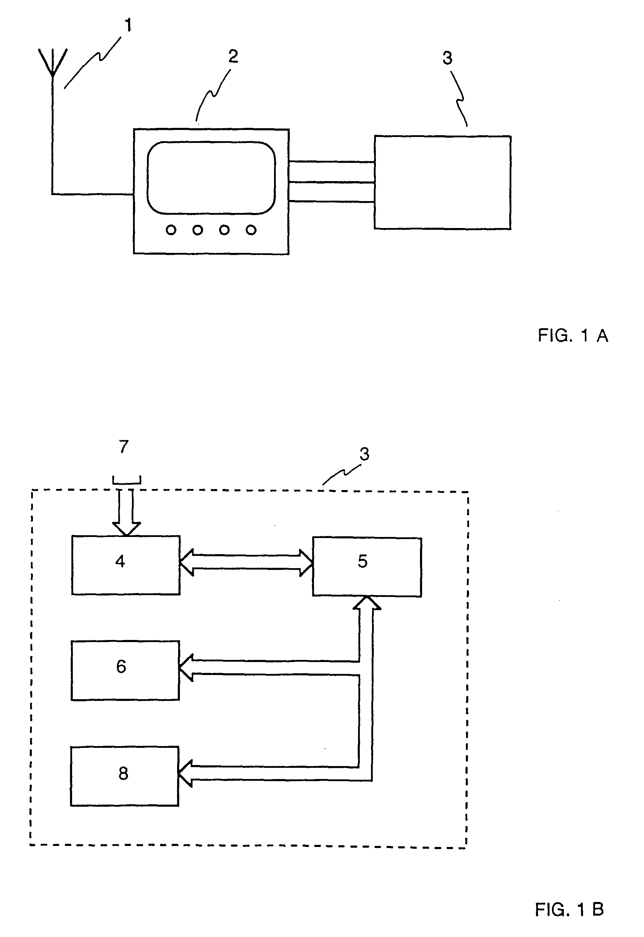

In the figure 1A, that represents the simplified block diagram of a reception system according to the invention, reference number 1 indicates a television receiving antenna; said antenna is connected to a television signals receiver indicated with reference number 2.

Reference number 3 indicates a signal decoder, necessary for decoding the ciphered television signals obtainable upon payment; the decoder 3 is connected to the television signals receiver 2, from which it receives the television signals to be decoded, and to which it supplies the decoded television signals.

In figure 1B the simplified diagram of the signals decoder 3 is represented.

Reference number 4 indicates the decoding circuit of television signals; which is connected, by way of a socket indicated with reference number 7, with the television signals receiver 2. Conveniently the socket 7 could use several pins left free in the conventional peritelevision sockets (SCART) normally present in television receivers. As an alternative it possible to use the video output and R, G, B inputs of the television.

Reference number 5 indicates a control unit (that can be conveniently constituted by a microcontroller, comprising a central unit, a read only memory (ROM), containing the operative instructions, a random access memory (RAM) and an input-output unit for the connections with the decoding circuit 4 and with the two presence detector circuits, indicated with the reference numbers 6 and 8.

The reference number 6 indicates a movement detector circuit of the type currently used in anti-intrusion devices; it is connected in a bi-directional way to the control unit 5.

Reference number 8 indicates a noise detector circuit, that can easily be constituted by a microphone and by a threshold amplifying-detecting circuit; which is also connected in a bi-directional way to the control unit 5.

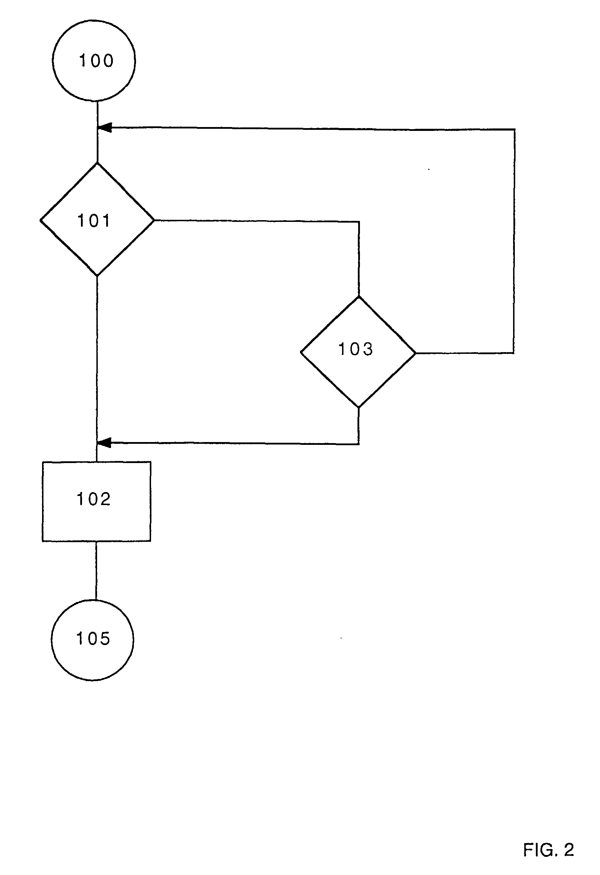

In figure 2 a significant part of the control logic circuit of the microcontroller 5 of the reception system of figure 1 is represented.

Block 100 is the starting block of the activating function of the decoder; control passes to the successive block 101.

Block 101 is a verifying block; it verifies whether the consent signal is coming from the movement detector 6, indicating that something in movement has been signalled; in the affirmative case control passes to block 102; in the negative case control passes to block 103 (in all the verifying blocks the lower output is the YES output; the lateral output is the NO output).

Block 103 is a verifying block, it verifies whether the consent signal is coming from the noise detector 8, indicating that a noise has been signalled that exceeds the determined threshold; in the affirmative case control passes to block 102; in the negative case control passes back to block 101.

Block 102 provides for activating the decoding circuit 4; control passes to block 105.

Block 105 is the terminal block of the end of operation; the control can return back to the initial block 100 or to another similar operative block of the control circuit.

The described example involves two presence detectors (a movement detector and a noise detector), connected in an OR type logic circuit; it is sufficient that one of the two gives its approval and the decoder is activated.

It is clear that when the activation is provided, before it is removed, it is necessary to pass a certain period of time before that, even in the absence of signals coming from the presence detectors, the decoding circuit is shut-down. This avoids, due to momentary absences of the user, annoying ON-OFF commutations that can occur of the decoding circuit; such function is taken care of by an appropriate delay circuit.

It is clear that numerous variants are possible to the described system:
- it is possible to connect two detectors in an AND type logic circuit (it is necessary to have the approval of both for the decoding operation to be activated);
- it is possible to substitute one of the indicated detectors with a different kind of detector (for example a light detector or a frequency detector typical of a television, such as an electromagnetic or audio field of 15625 Hz);
- it is possible to add to the two detectors of the example one or more additional detectors (for example one of those of the previous point), connecting them in OR or in AND with one or both of those described.

As is clear from the executed description, the reception system of signals according to the invention has considerable advantages respect the known appliances.

It is in fact clear that the signal reception system according to the invention allows the normal user to use the decoder, while it does not allow the use of the decoder in a room where nobody is present.

It is obvious that, remaining with the principles of the invention, numerous variants are possible to the characteristics of the signals receiving system described as an example, without for this departing from the scope of novelty inherent in the inventive idea, as it is clear that the apparatus used in connection with the method described in the practical execution of the invention can be varied concerning their specific characteristics and that the components used can be substituted with technically equivalent elements.

For example it is possible to connect the decoding device 3 to a video recorder device and in such case make the activation of the decoder dependant, as opposed to a presence detector, to a bobbin movement detector, extracting it for example from the placing in function of the motor that moves the drum and/or the heads of the video recorder.

Another variant could consist in providing that upon its turning on the decoder functions always for a certain period of determined time (for example 3 minutes) and then it is shut-down if within that time it has not detected the presence desired. This avoids the inconveniences in the case in which the decoder is based on the detection of the audio of the TV or of the line frequency and that the user turns on first of all the decoder and then the television.

## Claims

1. System for the reception of coded television signals, in which a television signal is coded so as that it cannot be received and reproduced in the normal way by normal television receivers, but only by receivers equipped with an appropriate decoder, characterised in that the system has a decoder (3) to be connected to a normal receiver of television signals (2) that said decoder (3) comprises, besides the said appropriate decoding circuit (4) of the television signal, one or more presence detecting devices (6,8) and a control unit (5), connected to said decoding circuit (4) and to said presence detecting devices (6, 8), and that the said decoding circuit (4) is shut down by the said control unit (5) in the case that such presence is not detected by said presence detecting devices (6, 8).

2. System for the reception of coded television signals, according to claim 1, characterised in that said detection device comprises an intrusion movement detector (6).

3. System for the reception of coded television signals, according to claim 1, characterised in that said detection device comprises an audio noise detector (8).

4. System for the reception of coded television signals, according to claim 1, characterised in that said detection device comprises a frequency detector typical of a television (15625 Hz).

5. System for the reception of coded television signals, according to claim 1, characterised, in that said detection device comprises a light detector.

6. System for the reception of coded television signals, according to claim 1, characterised in that said decoder (3) that activates the decoder (3) is connected to a video recorder and made dependant to a bobbin movement detector.

7. System for the reception of coded television signals, according to claim 6, characterised in that said bobbin movement detector is connected to the motor which moves the drum and/or the heads of the video recorder.

8. System for the reception of coded television signals, according to claim 1, characterised in that said presence detection device comprises a plurality of presence detectors of various kinds.

9. System for the reception of coded television signals, according to claim 8, characterised in that said presence detectors of various kinds are connected among themselves in an OR circuit.

10. System for the reception of coded television signals, according to claim 8, characterised in that said detectors of various kinds are connected among themselves in an AND circuit.

11. System for the reception of coded television signals, according to claim 8, characterised in that said detectors of various kinds are connected among themselves in a logic circuit comprising at least an OR gate and an AND gate.

12. System for the reception of coded television signals, according to one or more of the previous claims, characterised in that said decoder (3) is shut-down after a determined period of time from its switching on, if within that period of time the said presence is not detected.

13. System for the reception of coded television signals according to one or more of the preceding claims, characterised in that said decoder (3) and said receiver of television signals (2) share the same cabinet.

## Patentansprüche

1. System zum Empfangen codierter Fernsehsignale, bei dem ein Fernsehsignal so codiert wird, daß es nicht durch übliche Fernsehempfänger auf dem normalen Weg empfangen und wiedergegeben werden kann, sondern nur durch Empfänger, die mit einem geeigneten Decoder ausgerüstet sind,
**dadurch gekennzeichnet**, daß das System einen Decoder (3) enthält, der an einen üblichen Empfänger für Fernsehsignale (2) anschließbar ist, daß der decoder (3) neben der geeigneten Decodierschaltung (4) für die Fernsehsignale eine oder mehrere Präsenzerfassungseinrichtungen (6, 8) sowie eine Steuereinheit (5) enthält, die mit der Decodierschaltung (4) und den Präsenzerfassungseinrichtungen (6, 8) verbunden ist,. und daß die Decodierschaltung (4) durch die Steuereinheit (5) abgeschaltet wird, wenn eine solche Präsenz nicht durch die Präsenzerfassungseinrichtungen (6, 8) erfaßt wird.

2. System zum Empfangen codierter Fernsehsignale nach Anspruch 1,
**dadurch gekennzeichnet,** daß die Erfassungseinrichtung einen Aufschaltbewegungsdetektor (6) enthält.

3. System zum Empfangen codierter Fernsehsignale nach Anspruch 1,
**dadurch gekennzeichnet,** daß die Erfassungseinrichtung einen Audiorauschdetektor (8) enthält.

4. System zum Empfangen codierter Fernsehsignale nach Anspruch 1,
**dadurch gekennzeichnet,** daß die Erfassungseinrichtung einen für das Fernsehen kennzeichnenden Frequenzdetektor (15625 Hz) enthält.

5. System zum Empfangen codierter Fernsehsignale nach Anspruch 1,
**dadurch gekennzeichnet,** daß die Erfassungseinrichtung einen Lichtdetektor enthält.

6. System zum Empfangen codierter Fernsehsignale nach Anspruch 1,
**dadurch gekennzeichnet,** daß der Decoder (3) mit einem Videorecoder verbunden ist und die Aktivierung des Decoders (3) von einem Spulenbewegungsdetektor abhängt.

7. System zum Empfangen codierter Fernsehsignale nach Anspruch 6,
**dadurch gekennzeichnet,** daß der Spulenbewegungsdetektor mit dem Motor verbunden ist, welcher die Trommel und/oder die Köpfe des Videorecoders bewegt.

8. System zum Empfangen codierter Fernsehsignale nach Anspruch 1,
**dadurch gekennzeichnet,** daß die Präsenzerfassungseinrichtung mehrere Präsenzdetektoren unterschiedlicher Art enthält.

9. System zum Empfangen codierter Fernsehsignale nach Anspruch 8,
**dadurch gekennzeichnet,** daß die Präsenzdetektoren unterschiedlicher Art untereinander in einer ODER-Schaltung verbunden sind.

10. System zum Empfangen Codierter Fernsehsignale nach Anspruch 8,
**dadurch gekennzeichnet,** daß die Detektoren unterschiedlicher Art untereinander in einer UND-Schaltung verbunden sind.

11. System zum Empfangen codierter Fernsehsignale nach Anspruch 8,
**dadurch gekennzeichnet,** daß die Detektoren unterschiedlicher Art untereinander in einer Logikschaltung verbunden sind, die zumindest ein ODER-Gatter und ein UND-Gatter enthält.

12. System zum Empfangen codierter Fernsehsignale nach einem oder mehreren der vorstehenden Ansprüche,
**dadurch gekennzeichnet,** daß der Decoder (3) nach einer vorbestimmten Zeitperiode von seinem Anschalten an abgeschaltet wird, wenn innerhalb dieser Zeitperiode die Präsenz nicht erfaßt wird.

13. System zum Empfangen codierter Fernsehsignale nach einem oder mehreren der vorstehenden Ansprüche,
**dadurch gekennzeichnet,** daß der Decoder (3) und der Empfänger für die Fernsehsignale (2) das gleiche Gehäuse teilen.

## Revendications

1. Système pour la réception de signaux de télévision codés, dans lequel un signal de télévision est codé de telle façon qu'il ne puisse pas être reçu et reproduit de façon normale par des récepteurs de télévision normaux, mais uniquement par des récepteurs équipés d'un décodeur approprié, caractérisé en ce que le système comporte un décodeur (3) destiné à être connecté à un récepteur normal de signaux de télévision (2), en ce que ledit décodeur (3) comporte, à dudit circuit de décodage approprié (4) du signal de télévision, un ou plusieurs dispositifs détecteurs de présence (6, 8) et une unité de contrôle (5), reliée audit circuit de décodage (4) et auxdits dispositifs détecteurs de présence (6, 8), et en ce que ledit circuit de "décodage (4) est déconnecté par ladite unité de contrôle (5) dans le cas où une telle présence n'est pas détectée par lesdits dispositifs détecteurs de présence (6, 8).

2. Système pour la réception de signaux de télévision codés selon la revendication 1, caractérisé en ce que ledit dispositif de détection comporte un détecteur de déplacement d'intrusion (6).

3. Système pour la réception de signaux de télévision codés selon la revendication 1, caractérisé en ce que ledit dispositif de détection comporte un détecteur de bruit audio (8).

4. Système pour la réception de signaux de télévision codés selon la revendication 1, caractérisé en ce que ledit dispositif détection comporte un détecteur de fréquences typiques d'un poste de télévision (16625 Hz).

5. Système pour la réception de signaux de télévision codés selon la revendication 1, caractérisé en ce que ledit dispositif de détection comporte un détecteur de lumière.

6. Système pour la réception de signaux de télévision codés selon la revendication 1, caractérisé en ce que ledit décodeur (3) qui active le décodeur (3) est relié à un enregistreur vidéo et est rendu dépendant d'un détecteur de déplacement de bobine.

7. Système pour la réception de signaux de télévision codés selon la revendication 6, caractérisé en ce que ledit détecteur de déplacement de bobine est relié au moteur qui déplace la bobine et/ou les têtes de l'enregistreur vidéo.

8. Système pour la réception de signaux de télévision codés selon la revendication 1, caractérisé en ce que ledit dispositif détecteur de présence comporte une pluralité de détecteurs de présence de divers types.

9. Système pour la réception de signaux de télévision codés selon la revendication 8, caractérisé en ce que lesdits détecteurs de présence de divers types sont reliés entre eux dans un circuit OU.

10. Système pour la réception de signaux de télévision codés selon la revendication 8, caractérisé en ce que lesdits détecteurs de divers types sont reliés entre eux dans un circuit ET.

11. Système pour la réception de signaux de télévision codés selon la revendication 8, caractérisé en ce que lesdits détecteurs de divers types sont reliés entre eux dans un circuit logique comprenant au moins une porte OU et une porte ET.

12. Système pour la réception de signaux de télévision codés selon l'une ou plusieurs des revendications précédentes, caractérisé en ce que ledit décodeur (3) est déconnecté après une période de temps prédéterminée de son circuit d'activation, si ladite présence n'est pas détectée pendant ladite période de temps.

13. Système pour la réception de signaux de télévision codés selon l'une ou plusieurs des revendications précédentes, caractérisé en ce que ledit décodeur (3) et ledit récepteur de signaux de télévision (2) partagent le même boîtier.
